# EUROPEAN PATENT SPECIFICATION

(11) **EP 2 423 299 B1**
(45) Date of publication and mention of the grant of the patent: **26.04.2017**
(21) Application number: 10783134.9
(22) Date of filing: 01.06.2010
(51) Int. Cl.: A01N 43/653, A01N 47/34, C12C 1/02

(54) **METHOD FOR PRODUCING FERMENTED MALT BEVERAGE USING CEREALS TREATED WITH THIOPHANATE METHYL**
VERFAHREN ZUR HERSTELLUNG EINES FERMENTIERTEN MALZGETRÄNKS UNTER VERWENDUNG VON MIT THIOPHANAT-METHYL BEHANDELTEM GETREIDE
PROCÉDÉ DE PRODUCTION D'UNE BOISSON MALTÉE FERMENTÉE UTILISANT DES CÉRÉALES TRAITÉES AU THIOPHANATE-MÉTHYLE

(30) Priority: 04.06.2009 JP 2009135418
(43) Date of publication of application: 29.02.2012
(73) Proprietor: Nippon Soda Co., Ltd., Tokyo 100-8165 (JP)
(72) Inventor: BUSCHHAUS, Herbert, 40212 Düsseldorf (DE)
(74) Representative: Cabinet Plasseraud
(86) International application number: PCT/JP2010/003658
(87) International publication number: WO 2010/140346

(56) References cited:
- EP-A1- 1 864 574
- PAVLA HAVLOVÁ ET AL: "The Effect of Fungicidal Treatment on Selected Quality Parameters of Barley and Malt", JOURNAL OF AGRICULTURAL AND FOOD CHEMISTRY, vol. 54, no. 4, 1 February 2006 (2006-02-01), pages 1353-1360, XP55037961, ISSN: 0021-8561, DOI: 10.1021/jf0581372
- SUSUMU UEDA ET AL.: 'Effect of Thiophanate Methyl on the Incidence of Scab and the Mycotoxin Contamination in Wheat and Barley' JAPANESE JOURNAL OF PHYTOPATHOLOGY vol. 54, 1988, pages 476 - 482, XP055038910
- SCHWARZ, P. B. ET AL.: 'Relationship Between Fusarium Infection of Barley and the Gushing Potential of Malt' THE JOURNAL OF THE THE INSTITUTE OF BREWING&DISTILLING vol. 102, 1996, pages 93 - 96, XP008164721
- PAUL, P. A. ET AL.: 'Efficacy of Triazole-Based Fungicides for Fusarium Head Blight and Deoxynivalenol Control in Wheat: A Multivariate Meta-Analysis' PHYTOPATHOLOGY vol. 98, no. 9, September 2008, pages 999 - 1011, XP002588882

## Description

### TECHNICAL FIELD

The present invention relates to: a method for producing a fermented malt beverage by using cereal treated with thiophanate-methyl or wheat treated with prothioconazole; a fermented malt beverage produced by using such cereal; and a method for preventing gushing of a fermented malt beverage by using such cereal. Specifically, the present invention relates to: a method for producing a fermented malt beverage which can be kept from gushing, wherein the method uses cereal treated with thiophanate-methyl so as to inhibit the generation of deoxynivalenol (hereinafter, may be referred to as DON), or wheat treated with prothioconazole so as to inhibit the generation of DON; and the like.

Priority is claimed on Japanese Patent Application No. 2009-135418, filed June 4, 2009, the content of which is incorporated herein by reference.

### BACKGROUND ART

The term "gushing" used in fermented malt beverage products such as beer and sparkling liquor, and in their production technology, refers to a phenomenon of simultaneous overfoaming when opening bottled or canned beer or the like. So far, it has been known that beer brewed from grain and malt contaminated with molds tends to gush. Moreover, the gushing phenomenon is thought to be caused by metabolites produced by *Fusarium* and other molds, and these metabolites are known to survive the process of brewing (Patent Document 1).

Furthermore, the above-mentioned document states that *Fusarium* molds may produce DON and zearalenone during malting, and suggests that the gushing of beer may be related to zearalenone or DON. However, these are not experimentally proven facts.

Patent Document 2 states that spraying a fungicide which contains a benzimidazole-type fungicidal compound such as thiophanate-methyl as an active ingredient onto food crops such as wheat, barley, and the like can reduce the DON content in harvested crops. However, it also states that there is no correlation between the effect of preventing Fusarium ear blight and the DON reduction effect of thiophanate-methyl.

In Non-Patent Document 1, barley was evaluated for *Fusarium* infestation and the levels of metabolites as inducible factors of gushing. This confirmed that beer made from malt which was infested with *Fusarium* or contaminated with the *Fusarium* metabolites exhibited a tendency of gushing.

However, there is no disclosure about that beer can be brewed by using cereal such as barley treated with thiophanate-methyl in these documents.

In Non-Patent Document 2 is disclosed the treatment of barley and malt with different fungicides, namely azoxystrobin, epoxyconazole, kresoxim-methyl, flamoxadone, fluzilazole, prochloraz, metconazole, tebuconazole, triadimefon, carbendazim and epoxyconazole.

In Non-Patent Document 3 are disclosed triazole-based fungicides.

In Non-Patent Document 4 is disclosed the treatment of wheat and barley with thiophanate-methyl as a fungicide, at an earing stage and flowering stage.

There is no disclosure in any of Non-Patent Documents 2, 3 and 4 about treating wheat with prothioconazole nor about treating a cereal with thiophanate-methyl at early or late heading, to prevent gushing of a fermented malt beverage. References

### [Patent Documents]

Patent Document 1: Published Japanese Translation No. 2002-528101 of the PCT International Publication
Patent Document 2: WO2006/106742

### [Non-Patent Documents]

Non-Patent Document 1: P. B. Schwarz et. al. J. Inst. Brew., 1996, Vol. 102, pp. 93-96
Non-Patent Document 2: Pavla Havlova et al.: "The Effect of Fungicidal Treatment on Selected Quality Parameters of Barley and Malt", Journal of Agricultural and Food Chemistry, vol. 54, no. 4, 1 February 2006, pages 1353-1360
Non-Patent Document 3: Paul, P. A. et al.: "Efficacy of Triazole-Based Fungicides for Fusarium Head Blight and Deoxynivalenol Control in Wheat: A Multivariate Meta-Analysis", Phytopathology, vol. 98. no. 2 September 2008 (2008-09), pages 999-1011
Non-Patent Document 4: Susumu Ueda et al.: "Effect of Thiophanate Methyl on the Incidence of Scab and the Mycotoxin Contamination in Wheat and Barley", Japanese Journal of Phytopathology, vol. 54, 1988, pages 476-482

### DISCLOSURE OF INVENTION

It is an object of the present invention to provide a method for preventing gushing of a fermented malt beverage such as beer.

The inventor of the present invention conducted earnest studies so as to achieve the above-mentioned object. As a result, he found that the use of cereal such as barley treated with thiophanate-methyl, in particular, cereal such as barley that has been treated with thiophanate-methyl after the flower formation stage and before harvesting, or wheat treated with prothioconazole, can prevent gushing of the beer product. This has led to the completion of the present invention.

That is, the present invention relates to:
[1] a method for producing a fermented malt beverage, which uses cereal treated with thiophanate-methyl or wheat treated with prothioconazole, wherein the cereal treated with thiophanate-methyl is cereal which has been treated with thiophanate-methyl after a flower formation stage and before harvesting, and wherein the wheat treated with prothioconazole is wheat which has been treated with prothioconazole at early heading stage or at late heading stage.
[2] the method for producing a fermented malt beverage according to [1] mentioned above, wherein the cereal is barley.
   In addition, the present invention also relates to:
[3] a fermented malt beverage produced by using the method of [1] or [2] mentioned above: and
[4] a use of cereal treated with thiophanate-methyl or wheat treated with prothioconazole in the production of fermented malt beverage for preventing gushing of the fermented malt beverage, wherein the cereal treated with thiophanate-methyl is cereal which has been treated with thiophanate-methyl after a flower formation stage and before harvesting, and wherein the wheat treated with prothioconazole is wheat which has been treated with prothioconazole at early heading stage or at late heading stage.

The production method of the present invention is capable of preventing gushing of a fermented malt beverage product, as well as being capable of readily and stably providing to the market, a fermented malt beverage having no quality issues.

### BEST MODE FOR CARRYING OUT THE INVENTION

The cereal for use in the production method of the present invention is characterized in being treated with thiophanate-methyl, and the wheat therefor is characterized in being treated with prothioconazole. It is usual that the treatment of the cereal with thiophanate-methyl and the treatment of the wheat with prothioconazole are conducted by spraying them onto the cereal and the wheat during their growth and development by a known method.

The thiophanate-methyl and prothioconazole may be used, for example, in a pure form without the addition of any other component at the time of actual application, or, in a form that can be taken by a general agricultural chemical, namely in a form of a wettable powder, a granule agent, a powder agent, a wettable powder, a suspension agent, or a granular wettable powder, for the purpose of the application as an agricultural chemical.

It is possible to use thiophanate-methyl either by itself or concomitantly with a different type of benzimidazole-type fungicide. The different type of benzimidazole-type fungicide can be specifically exemplified by benomyl, carbendazim, thiabendazole, flubendazole, cypendazole, thiophanate, or the like.

Moreover, it is also possible to use thiophanate-methyl concomitantly with a sterol biosynthesis inhibitor, a strobilurin-type agent, and/or a guanidine-type fungicide. The sterol biosynthesis inhibitor can be specifically exemplified by tebuconazole, triadimefon, triadimenol, bitertanol, myclobutanil, hexaconazole, propiconazole, triflumizole, prochloraz, pefurazoate, fenarimol, pyrifenox, triforine, flusilazole, ethaconazole, dichlobutrazol, fluotrimazol, flutriafen, penconazole, diniconazole, imazalil, tridemorph, fenpropimorph, buthiobate, epoxiconazole, metoconazole, prothioconazole, or the like.

It is possible to use prothioconazole either by itself or concomitantly with a different type of azole-type fungicide. The different type of azole-type fungicide can be specifically exemplified by triflumizole, metconazole, ipconazole, pefurazoate, prochloraz, imibenconazole, triadimefon, or the like.

Furthermore, it is also possible for both thiophanate-methyl and prothioconazole to be used concomitantly with one or more different types of agricultural chemicals other than the above-mentioned agricultural chemicals, such as various kinds of fungicides, insecticides, acaricides, nematicides, and plant growth regulators. The concomitant use of thiophanate-methyl and/or prothioconazole with one or more of these agricultural chemicals enables protection against bacteria, acarid, and the like.

Specific examples of the fungicide include: copper agents such as basic copper chloride and basic copper sulfate; sulfur agents such as thiuram, zineb, maneb, mancozeb, ziram, propineb, and polycarbamate; polyhaloalkylthio agents such as captan, folpet, and dichlorfluanid; organochlorine agents such as chlorothalonil and fthalide; organophosphorus agents such as IBP, EDDP, trichlofos-methyl, pyrazophos, and fosetyl; dicarboxyimide agents such as iprodione, procymidone, vinclozolin, and fluoroimide; carboxyamide agents such as oxycarboxin, mepronil, flutolanil, tecloftalam, trichlamide, and pencycuron; acylalanine agents such as metalaxyl, oxadixyl, and furalaxyl; methoxyacrylate agents such as kresoxim-methyl (stroby), azoxystrobin, metominostrobin, trifloxystrobin, and pyraclostrobin; anilinopyrimidine agents such as andupurine, mepanipyrim, pyrimethanil, and diprozinil; and antibiotic agents such as polyoxin, blasticidin S, kasugamycin, validamycin, and dihydrostreptomycin sulfate.

Other examples of the fungicide that can be concomitantly used also include: propamocarb hydrochloride, quintozene, hydroxyisoxazole, methasulfocarb, anilazine, isoprothiolane, probenazole, chinomethionat, dithianon, dinocap, diclomezine, ferimzone, fluazinam, pyroquilon, tricyclazole, oxolinic acid, dithianon, iminoctadine acetate, iminoctadine albesilate, cymoxanil, pyrrolnitrin, methasulfocarb, diethofencarb, binapacryl, lecithin, sodium bicarbonate, fenaminosulf, dodine, dimethomorph, phenazine oxide, carpropamid, flusulfamide, fludioxonil, and famoxadone.

Examples of the insecticide include: organiophosphorus and carbamate-type insecticides such as fenthion, fenitrothion, diazinon, chlorpyrifos, ESP, vamidothion, phenthoate, dimethoate, formothion, malathon, trichlorfon, thiometon, phosmet, dichlorvos, acephate, EPBP, methyl parathion, oxydemeton-methyl, ethion, salithion, cyanophos, isoxathion, pyridaphenthion, phosalone, methidathion, sulprofos, chlorfenvinphos, tetrachlorvinphos, dimethylvinphos, propaphos, isofenphos, ethylthiometon, profenofos, pyraclofos, monocrotophos, azinphos methyl, aldicarb, methomyl, thiodicarb, carbofuran, carbosulfan, benfuracarb, furathiocarb, propoxur, BPMC, MTMC, MIPC, carbaryl, pirimicarb, ethiofencarb, and fenoxycarb; pyrethroid-type insecticides such as permethrin, cypermethrin, deltamethrin, fenvalerate, fenpropathrin, pyrethrin, allethrin, tetramethrin, resmethrin, dimethrin, propathrin, phenothrin, prothrin, fluvalinate, cyfluthrin, cyhalothrin, flucythrinate, etofenprox, cycloprothrin, tralomethrin, silafluofen, brofenprox, and acrinathrin; and benzoylurea-type and other insecticides such as diflubenzuron, chlorfluazuron, hexaflumuron, triflumuron, tetrabenzuron, flufenoxuron, flucycloxuron, buprofezin, pyriproxyfen, methoprene, benzoepin, diafenthiuron, acetamiprid, imidacloprid, nitenpyram, fipronil, cartap, thiocyclam, bensultap, nicotine sulfate, rotenone, metaldehyde, machine oil; microbial pesticides such as BT, insect pathogenic viruses.

Examples of the acaricide include: chlorobenzilate, phenisobromolate, dicofol, amitraz, BPPS, benzomate, hexythiazox, fenbutatin oxide, polynactin, chinomethionat, CPCBS, tetradifon, avermectin, milbemectin, clofentezine, cyhexatin, pyridaben, fenpyroximate, tebufenpyrad, pyrimidifen, fenothiocarb, and dienochlor. Examples of the nematicide include fenamiphos and fosthiazate. Examples of the plant growth regulator include gibberellins (for example, gibberellin A3, gibberellin A4, and gibberellin A7), IAA, and NAA.

In the method of the present invention, when mixed with a different type of fungicide or the like, the ratio of thiophanate-methyl or prothioconazole to the different type of fungicide or the like in the mixture can be extensively modified, while it usually ranges from 1:0.01 to 1:1000, and preferably from 1:0.1 to 1:100 as a weight ratio.

The timing to spray thiophanate-methyl onto the cereal is not specifically limited as long as the effect can be provided, although the timing is preferably after the flower formation stage and before harvesting.

The timing to spray prothioconazole onto the wheat is not specifically limited as long as the effect can be provided, although the timing is preferably after the heading stage and before harvesting.

The amounts of the application of thiophanate-methyl and prothioconazole vary depending on the ratio thereof to the different type of fungicide or the like in the mixture, the weather conditions, the preparation conditions, the application method, the place to be applied, and so on, while the amounts of these are usually from 1 to 10000 g, and preferably from 10 to 1000 g, as an active ingredient per hectare.

The cereal to be treated with thiophanate-methyl is not limited as long as it is a raw material of the fermented malt beverage. The cereal can be exemplified by barley, wheat, oats, rye, coixseed, rice, maize, millet, proso millet, buckwheat, Japanese barnyard millet, or the like. Preferred is barley that serves as a major ingredient of beer.

The fermented malt beverage can be exemplified by so-called malt 100% beer (pure malt beer) made by using barley malt only as a saccharine material, beer made by using rice, maize, or such a secondary ingredient, together with malt, so-called sparkling liquor made by using a reduced amount of malt under a certain level, or the like.

The method for producing a fermented malt beverage of the present invention is characterized in using cereal treated with thiophanate-methyl or wheat treated with prothioconazole as a raw material such as a malt raw material and/or a starchy raw material; and is particularly characterized in using barley treated with thiophanate-methyl as a malt raw material. The production process which uses the cereal treated with thiophanate-methyl or the wheat treated with prothioconazole is not specifically limited as long as the effect of the present invention can be achieved. For example, it is possible to use it as a malt raw material in the malting process, or to use it as a starchy raw material in the mash preparation process. In addition, the proportion of the cereal treated with thiophanate-methyl or the wheat treated with prothioconazole in the cereal raw material is not specifically limited as long as the effect of the present invention can be achieved.

The production process can be appropriately selected from known conditions and methods for the production of fermented malt beverages such as beer. For instance, this can be briefly explained by referring to a general production method as an example, in which: firstly, malt is produced from barley and/or wheat; thereafter, a part of the malt serving as a major ingredient, a part or all of the starch, and hot water are charged into a mash kettle, where the mixture is stirred with heat under control at a predetermined temperature, thereby liquefying the mixture. By doing so, a mash is produced. Moreover, the residual part of the malt and hot water are charged into a mash tun, where the mixture is kept mixed with heat at a predetermined temperature for a predetermined period of time. By doing so, a mash is produced. A secondary ingredient such as rice, barley, maize, (corn, starch), and liquid sugar can be used as a sugar source necessary for the fermentation while having the malt at a constant ratio. Next, the mash produced in the mash kettle is added to the mash produced in the mash tun, and the mash mixture is allowed to stand at a predetermined temperature for a predetermined period of time in the mash tun, thereby conducting saccharification due to the enzymatic action. Upon completion of the saccharification, the resultant mixture is filtered through a filtration tun. By doing so, wort is produced.

Hops are added to the wort produced by the filtration process. The mixture is boiled in a boiling kettle, thereby yielding hot wort.

The yielded hot wort is sent to a lauter tun, where coagulums formed by boiling, lees, and the like are sedimented and removed. By doing so, clarified wort is yielded. The thus yielded wort is cooled down to 6 to 10°C by a plate cooler. The cooled wort is transferred to a fermentation tank. This is then added with yeast and fermented for several days. The resultant fermented liquid is matured in a storage tank for several weeks. After the maturation process, the resulting beer is dispensed and filled into bottles.

### Examples

Hereinafter is a description of Examples. However, the present invention is not to be restricted by these Examples.

### [Examples 1 and 2, and Comparative Examples 1 to 3]

Spores of the genus *Fusarium* were artificially inoculated to a farm field at the grain formation stage. One day or seven days after, thiophanate-methyl was sprayed at a dose of 770 g ai/ha (wherein, the term "ai" of the unit "ai/ha" is an abbreviation of "active ingredient", and means "as an active ingredient per se" or "as a conversion into primary ingredient"). The harvested barley was malted through the germination process and the drying process.

Using the thus obtained malt, beer was produced according to a usual method.

The produced beer was filled into bottles, and was subjected to the gushing test after opening the bottles according to the following method.

### <Gushing test method>

The bottle to be tested was shaken for 22 hours and then left still for one minute. This bottle was weighed and then opened. The opened bottle was again weighed. By doing so, the gushing of the content was evaluated. The amount of overflow was calculated from the difference in weight between before and after opening the bottle.

In Comparative Examples, beers were produced using nontreated barley and barley treated with prothioconazole in the same manner, and were subjected to the gushing test.

The results are shown in the table below.

**[Table 1]**

| | Treatment | Amount of overflow (mL) | Proportion relative to nontreated lot (%) |
|---|---|---|---|
| Example 1 | Treated with thiophanate-methyl (770 g ai/ha) Flowering stage (Early blooming) | 10 | 21 |
| Example 2 | Treated with thiophanate-methyl (770 g ai/ha) Flowering stage (Late blooming) | 13 | 27 |
| Comparative Example 1 | Not treated | 48 | 100 |
| Comparative Example 2 | Treated with prothioconazole (250 g ai/ha) Flowering stage (Early blooming) | 37 | 77 |
| Comparative Example 3 | Treated with prothioconazole (250 g ai/ha) Flowering stage (Late blooming) | 56 | 117 |

### [Examples 3 to 6, and Comparative Example 4]

In Examples 3 and 4, the test was conducted in the same manner as that of Examples 1 and 2, except for the early heading stage and the late heading stage instead of the grain formation stage, and except for using wheat instead of barley.

In Examples 5 and 6, the test was conducted in the same manner as that of Examples 3 and 4, except for using prothioconazole instead of thiophanate-methyl at a different spray dose.

In Comparative Example 4, beer was produced by using nontreated wheat in the same manner, and was subjected to the gushing test.

The results are shown in the table below.

**[Table 2]**

| | Treatment | Amount of overflow (mL) | Proportion relative to nontreated lot (%) |
|---|---|---|---|
| Example 3 | Treated with thiophanate-methyl (770 g ai/ha) Early heading stage | 1.2 | 1.3 |
| Example 4 | Treated with thiophanate-methyl (770 g ai/ha) Late heading stage | 0.4 | 0.4 |
| Example 5 | Treated with prothioconazole (250 g ai/ha) Early heading stage | 0.5 | 0.5 |
| Example 6 | Treated with prothioconazole (250 g ai/ha) Late heading stage | 0.4 | 0.4 |
| Comparative Example 4 | Not treated | 94.7 | 100 |

### INDUSTRIAL APPLICABILITY

The production method of the present invention is capable of preventing gushing of a fermented malt beverage, as well as being capable of readily and stably providing to the market, a fermented malt beverage having no quality issues.

## Claims

1. A method for producing a fermented malt beverage, which uses cereal treated with thiophanate-methyl or wheat treated with prothioconazole, wherein the cereal treated with thiophanate-methyl is cereal which has been treated with thiophanate-methyl after a flower formation stage and before harvesting, and wherein the wheat treated with prothioconazole is wheat which has been treated with prothioconazole at early heading stage or at late heading stage.

2. The method for producing a fermented malt beverage according to claim 1, wherein the cereal is barley.

3. A fermented malt beverage produced by using the method of claim 1 or 2.

4. Use of cereal treated with thiophanate-methyl or wheat treated with prothioconazole in the production of fermented malt beverage for preventing gushing of the fermented malt beverage, wherein the cereal treated with thiophanate-methyl is cereal which has been treated with thiophanate-methyl after a flower formation stage and before harvesting, and wherein the wheat treated with prothioconazole is wheat which has been treated with prothioconazole at early heading stage or at late heading stage.

## Patentansprüche

1. Verfahren zur Herstellung eines fermentierten Malzgetränks, das mit Thiophanatmethyl behandeltes Getreide oder mit Prothioconazol behandelten Weizen verwendet, wobei das mit Thiophanatmethyl behandelte Getreide ein Getreide ist, welches nach dem Stadium der Blütenbildung und vor der Ernte mit Thiophanatmethyl behandelt wurde und wobei der mit Prothioconazol behandelte Weizen ein Weizen ist, der in dem frühen oder späten Stadium der Phase der Ährenschiebe mit Prothioconazol behandelt wurde.

2. Verfahren zur Herstellung eines fermentierten Malzgetränks nach Anspruch 1, wobei das Getreide Gerste ist.

3. Fermentiertes Malzgetränk, das mittels des Verfahrens von Anspruch 1 oder 2 hergestellt ist.

4. Verwendung von mit Thiophanatmethyl behandeltem Getreide oder mit Prothioconazol behandeltem Weizen bei der Herstellung eines fermentierten Malzgetränks zur Verhinderung des Heraussprudelns des fermentierten Malzgetränks, wobei das mit Thiophanatmethyl behandelte Getreide ein Getreide ist, welches nach dem Stadium der Blütenbildung und vor der Ernte mit Thiophanatmethyl behandelt wurde, und wobei der mit Prothioconazol behandelte Weizen ein Weizen ist, der in der frühen oder späten Phase der Ährenschiebe mit Prothioconazol behandelt wurde.

## Revendications

1. Procédé de production d'une boisson maltée fermentée, qui utilise une céréale traitée avec du thiophanate-méthyle ou du blé traité avec du prothioconazole, dans lequel la céréale traitée avec du thiophanate-méthyle est une céréale qui a été traitée avec du thiophanate-méthyle après un stade de floraison et avant récolte, et dans lequel le blé traité avec du prothioconazole est du blé qui a été traité avec du prothioconazole à un stade d'épiaison précoce ou à un stade d'épiaison tardif.

2. Procédé de production d'une boisson maltée fermentée selon la revendication 1, dans lequel la céréale est de l'orge.

3. Boisson maltée fermentée produite en utilisant le procédé selon la revendication 1 ou 2.

4. Utilisation d'une céréale traitée avec du thiophanate-méthyle ou de blé traité avec du prothioconazole dans la production d'une boisson maltée fermentée pour empêcher un jaillissement de la boisson maltée fermentée, dans laquelle la céréale traitée avec du thiophanate-méthyle est une céréale qui a été traitée avec du thiophanate-méthyle après un stade de floraison et avant récolte, et dans laquelle le blé traité avec du prothioconazole est du blé qui a été traité avec du prothioconazole à un stade d'épiaison précoce ou à un stade d'épiaison tardif.
